# NEUE EUROPÄISCHE PATENTSCHRIFT

(11) **EP 1 319 164 B2**
(45) Veröffentlichungstag und Bekanntmachung des Hinweises auf die Entscheidung über den Einspruch: **01.01.2014**
(45) Hinweis auf die Patenterteilung: 06.06.2007
(21) Anmeldenummer: 01982331.9
(22) Anmeldetag: 20.09.2001
(51) Int. Cl.: G01B 11/03, B25J 9/16, G06T 7/20, G01B 11/24

(54) **VERFAHREN ZUM MESSEN EINER OBJEKTGEOMETRIE MITTELS EINES KOORDINATIONSMESSGERÄTES**
METHOD FOR MEASURING THE GEOMETRY OF AN OBJECT BY MEANS OF A COORDINATE MEASURING DEVICE
PROCEDE POUR MESURER LA GEOMETRIE D'UN OBJET AU MOYEN D'UN APPAREIL DE MESURE DE COORDONNEES

(30) Priorität: 22.09.2000 DE 10047578; 06.06.2001 DE 10127329
(43) Veröffentlichungstag der Anmeldung: 18.06.2003
(73) Patentinhaber: Werth Messtechnik GmbH, 35394 Giessen (DE)
(72) Erfinder: CHRISTOPH, Ralf, 35641 Schöffengrund (DE)
(74) Vertreter: Stoffregen, Hans-Herbert
(86) Internationale Anmeldenummer: PCT/EP2001/010916
(87) Internationale Veröffentlichungsnummer: WO 2002/025207

(56) Entgegenhaltungen:
- EP-A- 0 822 029
- DE-A- 19 937 265
- US-A- 5 251 156
- US-A- 5 499 306
- US-A- 6 041 274

## Beschreibung

Die Erfindung bezieht sich auf ein Verfahren zum Messen einer Objektgeometrie, insbesondere einer Werkstück- oder Werkzeuggeometrie mittels, eines Koordinatenmessgerätes, wobei die Objektgeometrie durch einen optischen Sensor wie Kamera aufgenommen und ein Bildinhalt dargestellt wird, und wobei in dem Bildinhalt zur Messung des Objektes geeignete geometrische Strukturen wie geometrische Elemente oder Konturen ausgewählt und anschließend ausgewertet werden.

Bei Koordinatenmessgeräten mit Bildverarbeitung ist es bisher erforderlich, alle oder die wesentlichen Bildverarbeitungsfunktionen durch manuelle Interaktion auszulösen. So erfolgt zum Beispiel das manuelle Speichern des Bildes nachdem das Koordinatenmessgerät in den optimalen Beleuchtungszustand und die richtige Position gebracht worden ist. Nachdem der Bildinhalt manuell abgespeichert wurde, erfolgte ebenfalls eine manuelle Auswahl der zur Messung des Objektes geeigneten geometrischen Strukturen durch Setzen von Fenstern, die den interessierenden Bereich (Area of Interest) auswählen. Dabei ist zu berücksichtigen, dass die Auswahl im Allgemeinen anhand des subjektiven Eindrucks des Benutzers durchgeführt wird, was zu einer zeitaufwendigen und oft auch fehlerbehafteten Messung oder Programmierung führt.

Der vorliegenden Erfindung liegt das Problem zu Grunde, ein Verfahren zum Messen der Objektgeometrie der zuvor genannten Art dahingehend weiterzubilden, dass die Messungen auch durch ungeübtes Bedienpersonal schnell und fehlerfrei durchgeführt werden können.

Zur Lösung des Problems werden die Maßnahmen des Anspruchs 1 vorgeschlagen. Weiterbildungen ergeben sich aus den abhängigen Ansprüchen- Durch das Verfahren wird gegenüber dem Stand der Technik der Vorteil erreicht, dass eine zeitaufwendige Auswahl von für die Messung geeigneten geometrischen Strukturen durch einen Bediener entfällt. Die automatische Durchsuchung nach geometrischen Strukturen wird bei jeder Änderung des Bildinhaltes des optischen Sensors durchgeführt, so dass in dem dargestellten Bildinhalt stets aktualisiert die zur Messung geeigneten geometrischen Strukturen markiert sind. Es wird der Vorteil erreicht, dass ein Benutzer beispielsweise bei der Veränderung von Bildverarbeitungsfunktionen stets einen aktualisierten Bildinhalt mit markierten geometrischen Strukturen zur Messung der Objektgeometrie vorfindet. Vorzugsweise wird die Änderung des Bildinhaltes durch ein Signal repräsentiert.

Insbesondere ist vorgesehen, dass das die Änderung der Bildinhaltes repräsentierende Signal durch eine Steuereinheit einer Zoomoptik des Koordinatenmessgerätes bei Änderung der optischen Vergrößerung erzeugt wird. Auch ist vorgesehen, dass das die Änderung der Bildinhaltes repräsentierende Signal durch eine Wechseleinheit wie Revolverhalterung bei Änderung der optischen Vergrößerung durch Objektivwechsel erzeugt wird.

Auch ist vorgesehen, dass das die Änderung der Bildinhaltes repräsentierende Signal durch eine Beleuchtungssteuerung erzeugt wird, wenn ein Lichtsollwert nach einer Beleuchtungsänderung länger als eine Totzeit in einem Toleranzbereich liegt. Auch kann ein zusätzlicher optischer Sensor das die Änderung der Bildinhaltes repräsentierende Signal liefern, wenn die Lichtverhältnisse konstant sind und hieraus auf Änderung des Bildinhaltes geschlossen wird. Dies ist insbesondere dann der Fall, wenn die Objektgeometrie eine Gitterstruktur aufweist und bei Positionsänderung die Änderung der Lichtverhältnisse an sich konstant ist.

Um einem Bediener die Möglichkeit zu geben, bestimmte Messungen an der Objektgeometrie vorzunehmen, ist vorteilhaft die Möglichkeit gegeben, dass der Bediener die markierten geometrischen Strukturen manuell selektieren kann, beispielsweise durch Steuerung eines Bildschirmzeigers mittels einer Eingabevorrichtung wie Maus, Touchpad, Touchscreen und dgl..

Des Weiteren besteht die Möglichkeit, dass die erfindungsgemäß automatisch markierten geometrischen Strukturen bei erneuter Änderung des Bildinhaltes automatisch in eine Merkmalsliste übernommen werden. Dies ist besonders für die Programmierung von Prüfprogrammen von Bedeutung. Des Weiteren besteht vorteilhaft die Möglichkeit, dass die automatisch vorselektierten Elemente manuell gelöscht und durch den Bediener verändert werden können, wobei insbesondere ein interessierender Bereich aus der dargestellten Objektgeometrie beispielsweise eine Kontur durch den Bediener selbst definiert werden kann.

Bei einer besonders bevorzugten Verfahrensweise wird der Bildinhalt automatisch nach Regelgeometrieelementen wie Gerade und/oder Kreis durchsucht. Die automatische Durchsuchung nach Regelgeometrieelementen wie Gerade und Kreis hat den Vorteil, dass diese relativ einfach und schnell aus dem aufgenommenen Bildinhalt selektiert und markiert werden können, wobei diese Regelgeometrieelemente auch anschließend zur Messung der Objektgeometrie, d. h. zur weiteren Auswertung besonders geeignet sind.

Ein weiteres Verfahrensmerkmal besteht darin, dass zur Identifikation der zur Messung des Objektes geeigneten und relevanten geometrischen Strukturen ein Vergleich der erfassten geometrischen Strukturen der Objektgeometrie mit zumindest einem Regelgeometrieelement wie Kreis und/oder Gerade durchgeführt wird und dass diejenigen geometrischen Strukturen der Objektgeometrie markiert werden, die bezüglich des Regelgeometrieelementes eine geringste Formabweichung aufweisen.

Ein weiteres Verfahren sieht vor, dass die Markierung der zur Messung des Objektes geeigneten geometrischen Struktur derart erfolgt, dass ein Bildverarbeitungsfenster (Area of Interest) automatisch, vorzugsweise optimiert auf die markierte/detektierte geometrische Struktur wie Geometrieelement oder Kontur angepasst wird. Vorzugsweise erfolgt die optimierte Anpassung anhand einer vorgegebenen Teiletoleranz. Des Weiteren ist vorgesehen, dass die automatische Anpassung bezüglich Richtung und Proportion der markierten geometrischen Struktur durchgeführt wird. Durch die Reduzierung auf ein Bildverarbeitungsfenster kann eine genauere Auswertung zur Messung der Objektgeometrie erfolgen. Zu der automatischen Anpassung bezüglich der Teiletoleranz ist anzumerken, dass eine individuelle Einstellung beispielsweise eines Messprogramms bei Bearbeitung von einer Vielzahl gleicher Objektgeometrien erfolgen kann, wobei die zu untersuchenden geometrischen Strukturen der Objektgeometrie, d. h. des Werkstückes möglicherweise Toleranzschwankungen unterliegen, so dass Eingriffe durch eine Bedienperson möglichst ausgeschlossen werden.

Ein weiteres Verfahrensmerkmal besteht darin, dass aus der Menge der vorselektierten geometrischen Strukturen diejenige automatisch selektiert wird, die am nähesten zur Mitte eines dargestellten Bildausschnittes liegt. Der Vorteil dieses Verfahrensmerkmals liegt darin begründet, dass bei der Messung von Objektgeometrien mit einer Vielzahl von gleichen geometrischen Strukturen wie beispielsweise eines Halbleiterchips mit geätzten Transistorstrukturen durch den Bediener keine Nachbearbeitung der markierten geometrischen Strukturen erfolgen muss, denn erfindungsgemäß wird diejenige geometrische Struktur automatisch selektiert, die am nähesten zur Mitte eines Bildschirmausschnittes liegt und damit zur weiteren Auswertung, d. h. zur Messung zur Verfügung steht.

Ein weiteres Verfahren zum Messen einer Objektgeometrie besteht darin, dass in Abhängigkeit von zu vermessenden Objektklassen und/oder einer Betriebsart des Koordinatenmessgerätes Strategien zur Markierung der zur Messung des Objektes geeigneten geometrischen Strukturen ausgewählt bzw. festgelegt werden. Objektklassen sind beispielsweise von dem Material des zu vermessenden Objektes abhängig, das aus Metall, Kunststoff oder anderen Werkstoffen bestehen kann. Auch kann die Oberfläche des zu vermessenden Objektes unterschiedliche Reflektionseigenschaften und Farben aufweisen, so dass insoweit die Erfassung der Objektgeometrie mittels des optischen Sensors unterschiedliche Qualitäten aufweisen kann. Auch hat die Betriebsart des Koordinatenmessgerätes, wie beispielsweise Auflichtbetrieb oder Durchlichtbetrieb Auswirkungen auf die Darstellung der Objektgeometrie. Strategien zur Durchsuchung des Bildinhaltes nach zur Messung des Objektes geeigneten geometrischen Strukturen können beispielsweise verschiedene Bildfilter und/oder Konturfilter wie z. B. Dilation, Erosion oder Sobel (-Filter) sein. Dabei wird beispielsweise ein in Form eines Histogramms vorliegender Bildinhalt nach unterschiedlichen Algorithmen auf Konturübergänge untersucht.

Insbesondere ist Vorschlag vorgesehen, dass bei automatischem Durchlauf mehrerer Objekte gleicher Art sowohl eine Bildverarbeitungsalgorithmik, als auch das Bildverarbeitungsfenster um einen Mittelwert der jeweiligen geometrischen Strukturen angeordnet wird. Auch hierdurch wird die Messung einer Objektgeometrie beschleunigt und Eingriffe durch eine Bedienperson vermieden.

Eine Weiterbildung des erfindungsgemäßen Verfahrens ist darin zu sehen, dass in Abhängigkeit von den zur Messung des Objektes geeigneten geometrischen Strukturen zur Auswertung einer Form wie Kreis, Gerade oder dgl. oder des Maßes, wie Durchmesser, Abstand, Winkel oder dgl. auf verschiedene Verfahren wie Scanning oder punktweise Messung zurückgegriffen wird. Als Messverfahren zur Auswertung von Form und/oder Maß können beispielsweise Gesamtbildscanning- oder Einzelbildscanningverfahren angewendet werden. Zur Messung von Maßen bietet sich die Punktmessung an. Um die Selektion der geometrischen Strukturen wie Kontur und/oder Geometrieelemente zu vereinfachen, werden vorhandene Soll-Dateien zum Vergleich herangezogen. In den Solldateien sind Soll-Strukturen bzw. Sollgeometrien gespeichert, die bei der Durchsuchung des Bildinhaltes mit vorhandenen Ist-Geometrien verglichen werden, wobei vorzugsweise das Prinzip der geringsten Formabweichung zum Vergleich herangezogen wird.

Schließlich zeichnet sich das erfindungsgemäße Verfahren durch ein weiteres Verfahrensmerkmal aus, wobei eine dem Bildinhalt zu entnehmende Bildverarbeitungskontur in einem Pixelraster mit zusätzlichen Informationen bezüglich einer Subpixel-Koordinate innerhalb des Pixels versehen wird. Hierdurch kann insbesondere die Genauigkeit des Messverfahrens erhöht werden, da die Pixelraster oftmals Strukturen aufweisen, die größer sind als die zu vermessenden Strukturen. Dabei können die Konturen durch sogenannte Freeman-Ketten beschrieben werden, wobei zu jedem Byte der Freeman-Kette entsprechende Subpixel-Bytes hinzugefügt werden.

Bei Bildverarbeitungsoperatoren kann sowohl der Freeman-Code als auch die Subpixel-Information verarbeitet werden, wobei gegebenenfalls aus dem Freeman-Code und der Subpixel-Information absolute Koordinaten in Subpixel-Auflösung errechnet werden können. Auch besteht die Möglichkeit, dass die Subpixel-Information in getrennten Vektoren in x- und y-Richtung dargestellt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine rein schematische Darstellung eines Koordinatenmessgerätes zum Messen einer Objektgeometrie mit Bildverarbeitungseinheit und Anzeigeeinheit;
- Fig. 2: einen Ablaufplan eines Verfahrens zum Messen einer Objektgeometrie gemäß der Erfindung;
- Fig. 3: die Darstellung einer Objektgeometrie als Bildinhalt durch eine Anzeigeeinheit, wobei zur Messung des Objektes geeignete geometrische Strukturen markiert bzw. selektiert sind;
- Fig. 4: den Bildinhalt einer Objektgeometrie, wobei ein Bildverarbeitungsfenster automatisch optimiert an eine detektierte geometrische Struktur angepasst ist;
- Fig. 5: einen Bildinhalt einer Objektgeometrie, wobei ein Bildverarbeitungsfenster automatisch optimiert bezogen auf Richtung und Position an eine detektierte geometrische Struktur angepasst ist;
- Fig. 6: einen Bildinhalt einer Objektgeometrie, wobei ein Bildverarbeitungsfenster automatisch optimiert bezogen auf eine Teiletoleranz an eine detektierte geometrische Struktur angepasst ist;
- Fig. 7: eine Darstellung des Bildinhaltes eines zu vermessenden Objektes mit regelmäßiger Objektstruktur, wobei diejenige Struktur automatisch selektiert ist, die am nächsten zur Mitte eines Bildausschnittes liegt;
- Fig. 8a)-c): verschiedene Strategien zur Extraktion geometrischer Strukturen aus einem vorgegebenen Bildinhalt;
- Fig. 9: einen Entscheidungsbaum zur Wahl eines Messverfahrens in Abhängigkeit einer vorgegebenen Messaufgabe;
- Fig. 10: einen Entscheidungsbaum zur Auswahl einer Kontur- und Merkmalsextraktion in Abhängigkeit von Werkstückklassen und
- Fig. 11a)-c): die Darstellung einer Objektkontur in einem Pixel-Array gemäß Freeman-Code mit Ergänzung einer Subpixel-Information.

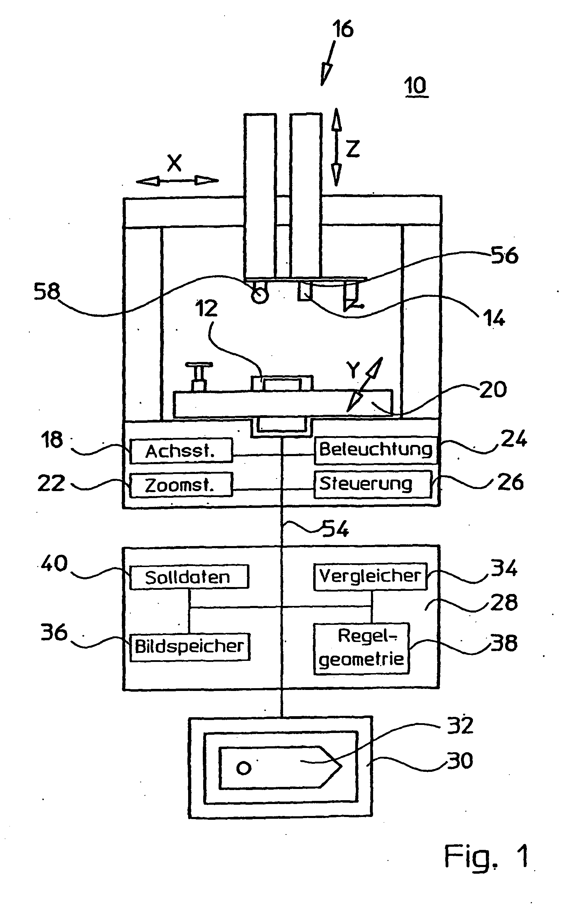

Fig. 1 zeigt rein schematisch den Aufbau eines Koordinatenmessgerätes 10 zum Messen einer Objektgeometrie eines Objektes 12, wie beispielsweise einer Werkstückgeometrie oder einer Werkzeuggeometrie mittels eines optischen Sensors 14, der im beschriebenen Beispiel als Bildverarbeitungssensor wie Kamera ausgebildet ist und einen Bildinhalt beispielsweise in Grauwerten zur Verfügung stellt. Der optische Sensor 14 ist in x-, y- und z-Richtung mittels eines Positionierungssystems 16 verfahrbar, das über eine Achssteuerung 18 gesteuert wird. Das Objekt 12 ist auf einer Objekthalterung 20 gelagert und kann beispielsweise rotierbar angeordnet sein.

Zur Steuerung des optischen Sensors 14 ist eine Steuereinheit 22 vorgesehen, mit der beispielsweise eine Änderung der optischen Vergrößerung durchgeführt werden kann. Ferner ist eine Steuereinrichtung 24 zur Änderung einer Lichtintensität vorgesehen, der das Objekt 12 bei einer Messung ausgesetzt ist. Des Weiteren ist eine an sich übliche Steuereinheit 26 zur Steuerung und Überwachung der weiteren Funktionen des Koordinatenmessgerätes 10 vorgesehen.

Zur Verarbeitung der von dem optischen Sensor 14 aufgenommenen Bilder ist eine Bildverarbeitungseinheit 28 mit dem Koordinatenmessgerät 10 verbunden, an der eine Anzeigeeinheit 30 zur Darstellung eines der Objektgeometrie entsprechenden Bildinhaltes 32 angeschlossen ist. Die Bildverarbeitungseinheit 28 umfasst zumindest einen Vergleicher 34, einen Bildspeicher 36, eine Speichereinheit 38 für vorgegebene RegeJgeometrien sowie eine Speichereinheit 40 für vorgegebene Soll-Daten.

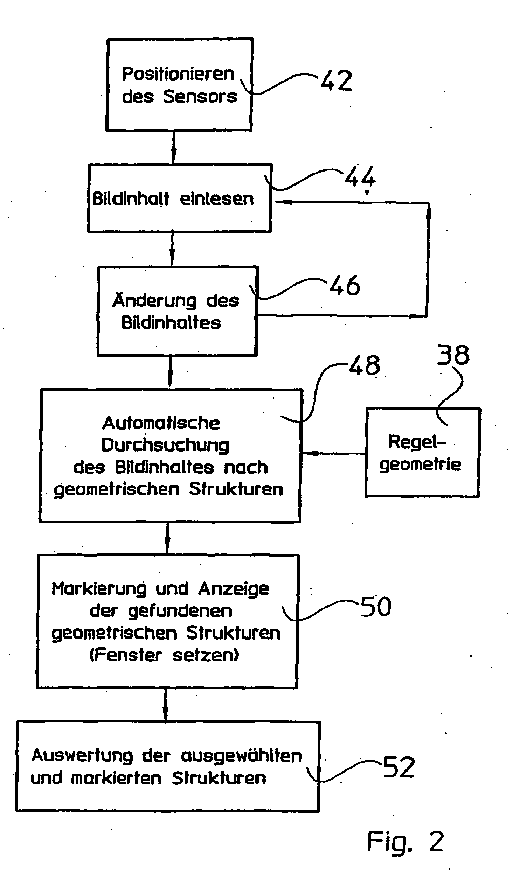

Fig. 2 zeigt den Ablauf des erfindungsgemäßen Verfahrens. Gemäß eines ersten Verfahrensschrittes 42 wird der optische Sensor 14 mittels des Positionierungssystems 16 in eine Position zur Messung des Objektes 12 verfahren. Die Belichtung des Objektes sowie die notwendige Vergrößerung sowie weitere notwendige Einstellungen werden durch die Steuereinheiten 22 und 24 automatisch bzw. von einer Bedienperson manuell eingestellt.

In einem weiteren Verfahrensschritt 44 wird der durch den optischen Sensor 14 aufgenommene Bildinhalt in einen Bildspeicher 36 eingelesen und gespeichert. Sodann erfolgt in einem nächsten Verfahrensschritt 46 eine Überprüfung, ob sich der Bildinhalt des optischen Sensors 14 ändert. Sofern eine Änderung des Bildinhaltes erkannt wird, erfolgt eine automatische Durchsuchung des Bildinhaltes nach den zur Messung des Objektes geeigneten geometrischen Strukturen in einem Verfahrensschritt 48. In einem Verfahrensschritt 50 werden sodann die geeigneten Strukturen markiert, d. h. beispielsweise durch farbliche Geraden, Kreise oder ähnliche Strukturen hervorgehoben oder beispielsweise mittels eines angepassten Fensters markiert. In einem Verfahrensschritt 52 werden die so markierten/selektierten geometrischen Strukturen zur weiteren Auswertung zur Verfügung gestellt, d. h. beispielsweise abgespeichert.

Die Erfassung der Änderung des Bildinhaltes gemäß Verfahrensschritt 46 kann auf verschiedene Arten durchgeführt werden. In bevorzugter Ausführungsform wird aufgrund einer Änderung der optischen Vergrößerung und/oder der Position einer mechanischen Achse des Positionierungssystems 16 und/oder einer Änderung der Lichtintensität auf die Änderung des Bildinhalts geschlossen. Dabei ist vorgesehen, dass die Steuereinheit 22 zur Steuerung der Zoomoptik des optischen Sensors 14 ein Signal beispielsweise über eine Busleitung 54 an die Bildverarbeitungseinheit 28 weiterleitet, so dass entsprechend ein neuer Bildinhalt eingelesen werden kann, der sodann gemäß Verfahrensschritt 48 automatisch nach geometrischen Strukturen durchsucht werden kann. Des Weiteren ist vorgesehen, dass beispielsweise über eine Wechseleinheit 56 wie Revolver bei Änderung der optischen Vergrößerung durch Objektivwechsel ein Signal an die Bildverarbeitungseinheit 28 weitergeleitet wird. Auch ist vorgesehen, dass die Achssteuerung 18 ein Signal zum Erkennen der Änderung des Bildinhaltes liefert, wenn ein Zählerzustand der Achsen nach erfolgter Positionsänderung länger als eine Totzeit konstant ist. Ferner ist vorgesehen, dass die Belichtungssteuerung 24 ein Signal liefert, wenn ein Lichtsollwert länger als eine Totzeit in einem Toleranzbereich liegt. Hierfür kann ein zusätzlicher Sensor 58 vorgesehen sein, der ein Signal liefert, wenn die Lichtverhältnisse konstant sind und hieraus auf Änderung des Bildinhaltes geschlossen werden kann.

Zum Verfahrensschritt 48 ist zu erwähnen, dass zur Markierung/Identifikation der messtechnisch relevaten geometrischen Strukturen ein Vergleich der Konturen/geografischen Elemente des eingelesenen Bildinhaltes mit in der Speichereinheit 38 abgelegten Regelgeometrieelementen wie Kreis und Gerade erfolgt, wobei als Kriterium die geringste Formabweichung herangezogen wird. Mit anderen Worten wird an die aufgenommenen und vorzugsweise in Grauwerten in einer 2D-Matrix dargestellten Bildelemente eine Anpassung vordefinierter Regelgeometrieelemente vorgenommen und bei einer Übereinstimmung oder nahezu Übereinstimmung erfolgt in Abhängigkeit des Kriteriums der geringsten Formabweichung eine Markierung der ausgewählten geografischen Struktur.

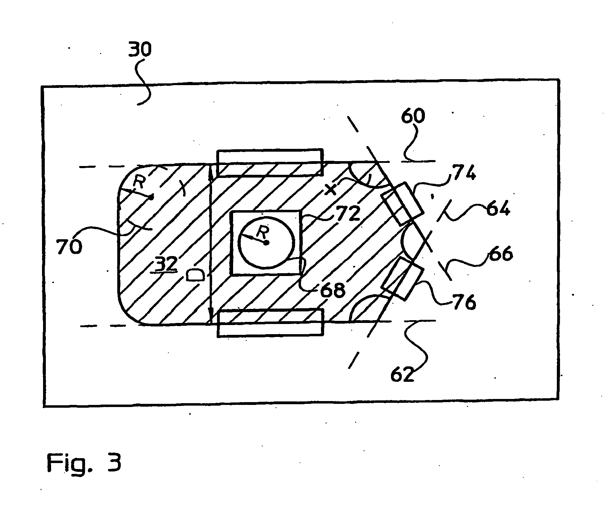

In Fig. 3 ist rein beispielhaft die Objektgeometrie 32 des Objektes 12 auf der Anzeigeeinheit 30 dargestellt. Die automatisch selektierten geometrischen Strukturen, im dargestellten Ausführungsbeispiel Geraden und Kreise, sind durch gestrichelte Markierungen 60, 62, 64, 66, 68, 70 dargestellt, die beispielsweise auch farblich gegenüber der Kontur des Objektes abgehoben sein können. Im beschriebenen Ausführungsbeispiel wurde der Bildinhalt 32 automatisch nach vorgegebenen Regelgeometrieelementen Gerade und Kreis durchsucht, die sodann automatisch markiert wurden. Die so markierten geometrischen Strukturen können sodann ausgewertet werden, d. h. beispielsweise Bestimmung eines Radius R der Kreisstrukturen 68, 70, Bestimmung eines Winkels α zwischen den Geraden 60, 66 oder Bestimmung eines Abstandes D zwischen den Geraden 60, 62.

Alternativ besteht auch die Möglichkeit, dass die automatisch vorgeschlagenen geometrischen Strukturen bzw. Konturen und Elemente manuell durch eine Bedienperson selektiert werden. Dabei ist vorgesehen, dass die markierten geometrischen Strukturen beispielsweise über einen Bildschirmzeiger durch Steuerung einer Maus selektiert werden. Dadurch kann die Messung der Objektgeometrien auf gewünschte Bereiche eingeschränkt werden. Auch besteht die Möglichkeit, dass die automatisch vorselektierten Elemente bzw. Konturen bei erneuter Veränderung des Bildinhaltes beispielsweise durch Verfahren der Positioniereinheit 16, durch Änderung der Belichtung oder der Zoomeinstellung automatisch in eine Merkmalsliste übernommen werden, so dass diese für eine weitere Messung gespeichert und übernommen werden können. Auch können die automatisch vorselektierten Elemente durch die Bedienperson verändert und gelöscht werden oder ein interessierender Bereich aus der Kontur kann durch den Bediener selbst definiert werden.

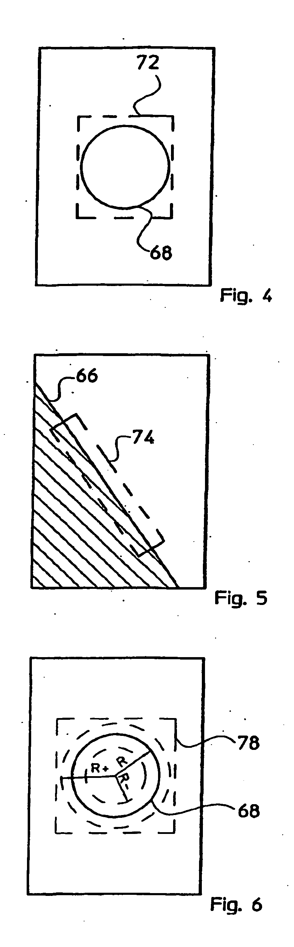

Zu dem Verfahrensmerkmal 50, d- h. der Markierung/Anzeige der selektierten geometrischen Strukturen ist anzumerken, dass die Markierung/Setektierung auf unterschiedliche Weise durchgeführl werden kann. Alternativ zu der zuvor erwähnten Markierung durch Geraden bzw. Kreise kann gemäß eines eigenerfinderischen Vorschlags ein Bildbearbeitungsfenster (Area of Interest) automatisch und optimiert auf die selektierte geometrische Struktur bzw. Geornetrieelement/Kontur angepasst werden. Beispiele sind in den Fig. 4 bis 6 dargestellt.

Wird beispielsweise gemäß Fig. 4 in einem ersten Bildinhalt die Kontur des Kreises 68 dargestellt, wird automatisch und optimiert auf die detektierte Kreiskontur ein Bildverarbeitungsfenster 72 angepasst, wodurch eine sehr genaue Auswertung erfolgen kann. Ändert sich der Bildinhalt beispielsweise durch Verfahren des optischen Sensors 14, so erfolgt wiederum eine automatische und optimierte Anpassung auf das nunmehr selektierte Geometrieelement/Kontur, die gemäß Fig. 5 als Gerade erkannt wird. Es werden Bildbearbeitungsfenster 74, 76 angepasst, die entsprechend Richtung und Proportion an die selektierten Geraden 64, 66 angepasst werden.

Auch besteht die Möglichkeit, dass ein Bildverarbeitungsfenster 78 anhand einer vorgegebenen Teiletoleranz Δ automatisch und optimiert an das detektierte Geometrieelement 68 wie Kreis angepasst wird, wie dies in Fig. 6 dargestellt ist. Dabei liegt der Kreis mit dem Durchmesser R beispielsweise in einem Toleranzbereich zwischen R-Δ und R+Δ, so dass das Bildverarbeitungsfenster 78 an den größeren Radius R+Δ angepasst wird. Dies ist insbesondere beim Ablauf eines Messprogramms für eine Serie von gleichen Objekten von Vorteil, da dadurch Eingriffe durch eine Bedienperson weitgehend ausgeschlossen werden können.

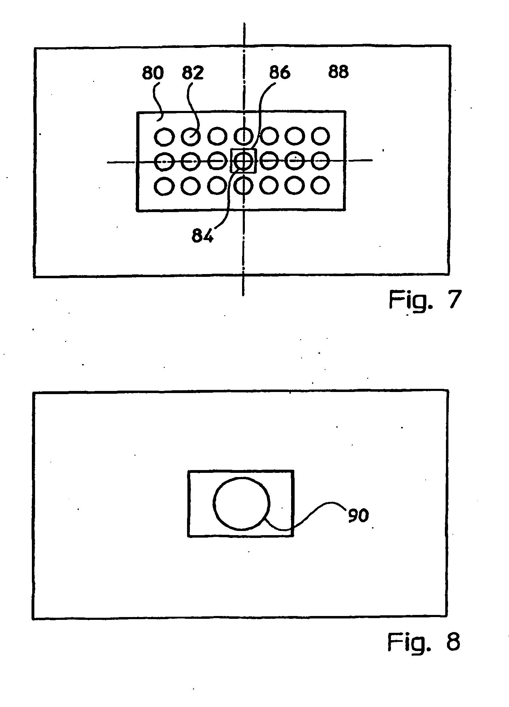

Fig. 7 zeigt den Bildinhalt 80 einer Objektgeometrie mit regelmäßigen geometrischen Strukturen 82, wie beispielsweise bei einem Halbleiterchip, das geätzte Strukturen auf seiner Oberfläche aufweist. Zur Vereinfachung der Auswertung der markierten geometrischen Strukturen kann gemäß eines Verfahrensmerkmals vorgesehen sein, dass aus der Menge der vorselektierten geometrischen Strukturen 82 diejenige geometrische Struktur 84 automatisch selektiert wird, die am nächsten im Zentrum 86 eines Bildschinnausschnitles 88 liegt. Durch die beschriebene Verfahrensmaßnahme wird der Vorteil erreicht, dass keine zusätzlichen Selektionen notwendig werden.

Auch ist vorgesehen, dass bei der automatischen Messung mehrerer Objekte 12 gleicher Art eine Bildverarbeitungsalgorithmik und ein Bildverarbeitungsfenster um den Mittelpunkt der jeweiligen Geometrieelemente angeordnet werden.

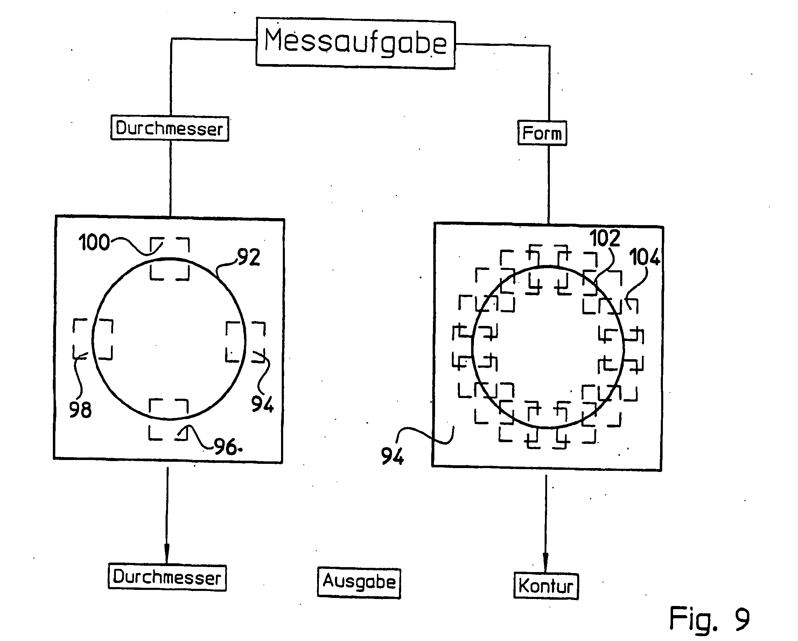

In Fig. 8 und 9 sind verschiedene Verfahren dargestellt, die in Abhängigkeit von den zu messenden Geometriemerkmalen wie Form oder Maß bei dem erfindungsgemäßen Verfahren verwendet werden können. So ist in Fig. 8 beispielsweise ein Einzelscanning-Verfahren dargestellt, mit dem sowohl Formmerkmale als auch Maße einer Kontur 90 ermittelt werden können. Hierbei wird die Kontur 90 mit einem einzigen Scann-Vorgang erfasst. Bei den in Fig. 9 dargestellten Verfahren handelt es sich um eine Punktmessung, die üblicherweise zur Bestimmung von Maßen wie Durchmesser, Abstand und Winkel verwendet wird. Dabei ist vorgesehen, dass eine Kontur 92 wie Kreiskontur einer Bohrung durch mehrere Einzelmessungen 94, 96, 98, 100 bestimmt wird. Dazu werden die Einzelmessungen 94 - 100 ausgewertet und mathematisch in Beziehung gesetzt, um beispielsweise Maße eines Objektes wie Durchmesser zu bestimmen. Ferner ist in Fig. 9 ein Scanning-Verfahren dargestellt, mit dem eine Kontur 102 durch sich überlappende Einzelbilder 104 erfasst wird. Auch dieses Verfahren kann sowohl zur Bestimmung von Form als auch Maß verwendet werden. Wie bereits zuvor erwähnt, kann zum Durchsuchen des Bildinhaltes nach zur Messung geeigneten geometrischen Strukturen Regelgeometrien wie Kreise oder Geraden verwendet werden, die in einem Speicher 38 hinterlegt sind. Auch besteht die Möglichkeit, zur Selektion der Kontur bzw. Geometrieelemente in einem Speicher 40 vorhandene Solldateien zum Vergleich heranzuziehen, so dass bestimmte, vorher ausgesuchte Strukturen auf einfache Weise selektiert werden können.

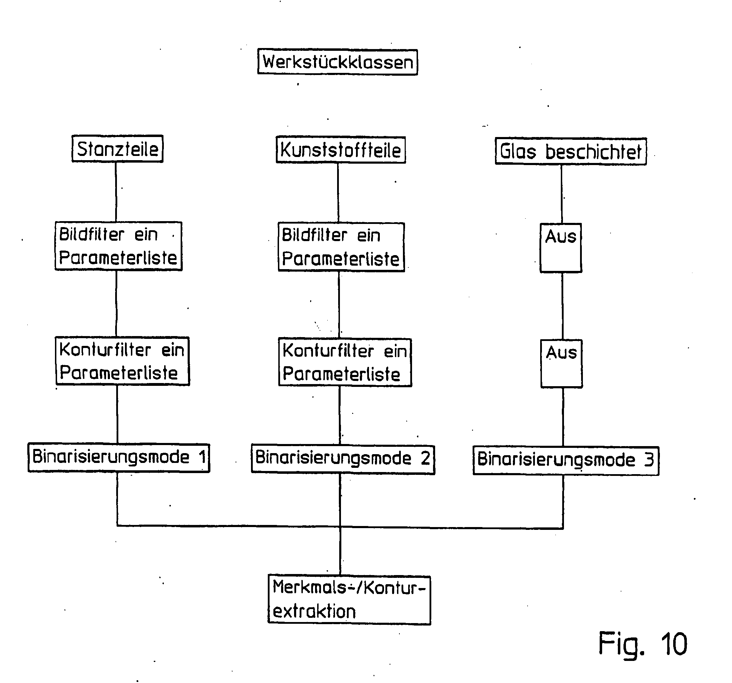

Eine weitere Verbesserung des Verfahrens zur Messung des Objektes 12 wird dadurch erreicht, dass die Strategien zur Kontur- und Merkmalsextraktion wie beispielsweise Binarisierungsmoden 1, 2 oder 3 wie in Fig. 10 dargestellt, in Abhängigkeit von Objekt- bzw. Werkstückklassen, d. h. in Abhängigkeit von deren Werkstoff wie Metall, Kunststoff oder Glas sowie deren Oberflächenbeschaffenheit wie hell oder dunkel und/oder in Abhängigkeit der eingestellten Betriebsart des Koordinatenmessgerätes wie beispielsweise Auflichtverfahren oder Durchlichtverfahren festgelegt sind.

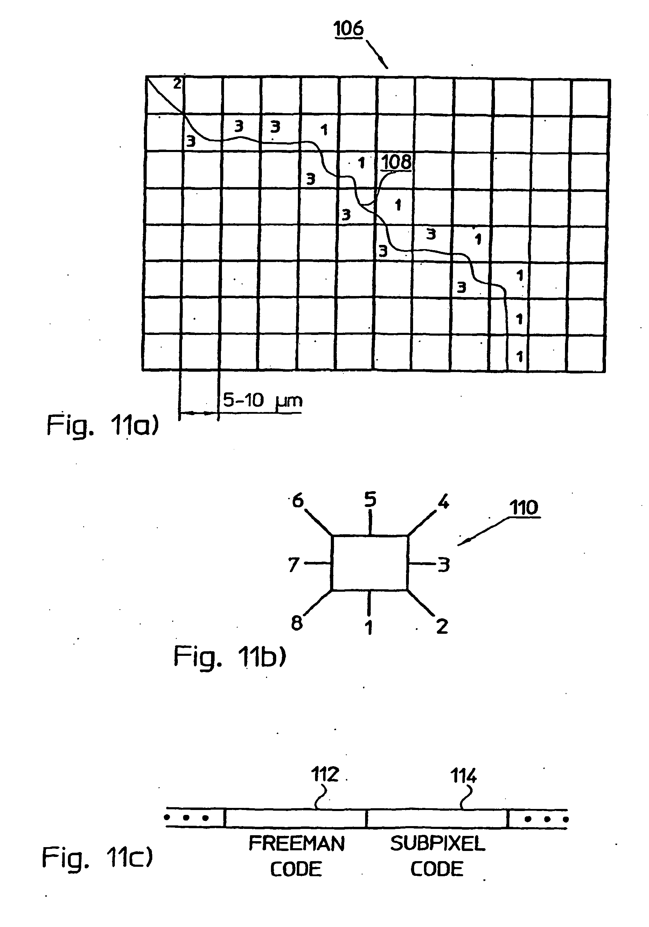

Fig. 11 zeigt ein Ausführungsbeispiel des Verfahrens, wonach eine in einem Pixelraster 96 dargestellte Kontur 98 des Objektes 12 mittels eines Freeman-Codes beschrieben ist. Fig. 11b zeigt ein einzelnes Pixel 100 mit den Koeffizienten für die Freeman-Codierung. In Fig. 11a sind Koeffizienten beispielhaft eingetragen. Die übliche Freeman-Codierung ist jedoch mit dem Nachteil behaftet, dass ein Pixel eines üblichen Pixel-Arrays 96 in der Regel eine Ausdehnung von 5 bis 10 µm aufweist und somit bei Messung von Strukturen < 5µm eine hohe Messunsicherheit auftritt. Insoweit besteht die Forderung, auch Informationen über den Verlauf der Kontur innerhalb eines Pixels 98 zu erhalten. Hierzu wird vorgeschlagen, dass die Bildverarbeitungskontur im Pixelraster mit zusätzlichen Informationen zur Subpixel-Koordinate innerhalb des Pixel versehen werden. Dazu ist vorgesehen, dass die Konturen 98 in sogenannte Freeman-Ketten, in Fig. 11c dargestellt, geschrieben werden und zu jedem Byte 102 der Freeman-Kette entsprechende Subpixel-Bytes 104 hinzugefügt werden. Bei anschließenden Bildverarbeitungsoperatoren wie beispielsweise Zoomen, Autokontrast oder Bildkorrekturfiltern kann sowohl der Freeman-Code 102 als auch die Subpixel-Information 104 verarbeitet werden. Die aus dem Freeman-Code und der Subpixel-Information berechnete absolute Koordinate kann in Subpixel-Auflösung errechnet werden. Auch kann die Subpixel-Information in getrennten Vektionen in x- und y-Richtung dargestellt werden.

## Patentansprüche

1. Verfahren zur Messung einer Objektgeometrie (12), insbesondere einer Werkstück- oder Werkzeuggeometrie, mittels eines Koordinatenmessgerätes (10), wobei die Objektgeometrie (12) durch einen optischen Sensor (14) wie Kamera aufgenommen und als Bildinhalt (32) dargestellt wird, und wobei in dem Bildinhalt zur Messung des Objektes (12) geeignete geometrische Strukturen (60-70) wie geometrische Elemente oder Konturen ausgewählt und anschließend ausgewertet werden,
**dadurch gekennzeichnet,**
**dass** automatisch, sofern eine Änderung des Bildinhaltes erkannt wird, dieser automatisch nach den zur Messung des Objektes (12) geeigneten geometrischen Strukturen (60-70) durchsucht wird, und dass die geeigneten Strukturen markiert und zur weiteren Auswertung zur Verfügung gestellt werden, wobei die Erfassung der Änderung des Bildinhaltes aufgrund einer Änderung der optischen Vergrößerung und/oder der Position der mechanischen Achsen des Koordinatenmessgerätes (10) wenn ein Zählerstand zumindest einer Achse des Koordinatenmessgerätes (10) nach einem Positionswechsel länger als eine Totzeit konstant ist, und/oder der Lichtintensität erfolgt.

2. Verfahren nach Anspruch 1,
**dadurch gekennzeichnet,**
**dass** die Änderung des Bildinhaltes (32) durch ein Signal repräsentiert wird.

3. Verfahren nach Anspruch 1 oder 2
**dadurch gekennzeichnet,**
**dass** das die Änderung des Bildinhaltes (32) repräsentierende Signal durch eine Steuereinheit (22) einer Zoomoptik des Koordinatenmessgerätes (10) bei Änderung der optischen Vergrößerung erzeugt wird.

4. Verfahren nach zumindest einem der vorhergehenden Ansprüche,
**dadurch gekennzeichnet,**
**dass** das die Änderung des Bildinhaltes (32) repräsentierende Signal durch eine Wechseleinheit (56) wie Revolverhalterung bei Änderung der optischen Vergrößerung durch Objektivwechsel erzeugt.

5. Verfahren nach zumindest einem der vorhergehenden Ansprüche,
**dadurch gekennzeichnet,**
**dass** das die Änderung des Bildinhaltes (32) repräsentierende Signal durch eine Beleuchtungssteuerung (24) erzeugt wird, wenn ein Lichtsollwert nach einer Lichtänderung länger als eine Totzeit in einem Toleranzbereich liegt.

6. Verfahren nach zumindest einem der vorhergehenden Ansprüche,
**dadurch gekennzeichnet,**
**dass** das die Änderung des Bildinhaltes (32) repräsentierende Signal durch einen zusätzlichen optischen Sensor erzeugt wird, wenn die Lichtverhältnisse konstant sind und hieraus auf Änderungen des Bildinhalts geschlossen wird.

7. Verfahren nach zumindest einem der vorhergehenden Ansprüche,
**dadurch gekennzeichnet,**
**dass** der Bildinhalt (32) automatisch nach zumindest einem Regelgeometrieelement wie beispielsweise Gerade und/oder Kreis durchsucht wird.

8. Verfahren nach zumindest einem der vorhergehenden Ansprüche,
**dadurch gekennzeichnet,**
**dass** die automatisch vorgeschlagenen geometrischen Strukturen wie Konturen und Geometrieelemente (60 - 70) manuell durch die Bedienperson, beispielsweise durch Steuerung eines Bildschirmzeigers mittels einer Eingabevorrichtung wie Maus, Touchpad, Touchscreen oder dgl. selektiert werden.

9. Verfahren nach zumindest einem der vorhergehenden Ansprüche,
**dadurch gekennzeichnet,**
**dass** die automatisch selektierten geometrischen Strukturen bei erneuter Änderung des Bildinhaltes (32) automatisch in eine Merkmalsliste übernommen werden.

10. Verfahren nach zumindest einem der vorhergehenden Ansprüche,
**dadurch gekennzeichnet,**
**dass** die automatisch vorselektierten Elemente (60-70) manuell gelöscht und durch den Bediener verändert werden, wobei insbesondere ein interessierender Bereich aus der dargestellten Objektgeometrie beispielsweise eine Kontur durch den Bediener selbst definiert wird.

11. Verfahren zum Messen einer Objektgeometrie nach Anspruch 1,
**dadurch gekennzeichnet,**
**dass** zur Identifikation der zur Messung des Objektes (12) geeigneten und relevanten geometrischen Strukturen (60 - 70) ein Vergleich der geometrischen Strukturen der Objekgeometrie mit zumindest einem Regelgeometrieelement wie Kreis und/oder Gerade durchgeführt wird und dass diejenigen optischen Strukturen der Objektgeometrie markiert werden, die bezüglich des Regelgeometrieelementes eine geringste Formabweichung aufweisen.

12. Verfahren zum Messen einer Objektgeometrie nach Anspruch 1,
**dadurch gekennzeichnet,**
**dass** die Markierung der zur Messung des Objektes geeigneten geometrischen Struktur derart erfolgt, dass ein Bildverarbeitungsfenster (72, 74 76, 78) automatisch auf die markierte geometrische Struktur wie Geometrieelement oder Kontur angepasst wird.

13. Verfahren nach Anspruch 12,
**dadurch gekennzeichnet,**
**dass** eine optimierte Anpassung anhand einer vorgegebenen Teiletoleranz erfolgt.

14. Verfahren nach Anspruch 12 bis 13,
**dadurch gekennzeichnet,**
**dass** die automatische Anpassung bezüglich Richtung und Proportion der markierten geometrischen Struktur (64, 66) durchgeführt wird.

15. Verfahren zum Messen einer Objektgeometrie, nach Anspruch 1,
**dadurch gekennzeichnet,**
**dass** aus einer Menge von vorselektierten geometrischen Strukturen (60 - 70, 82, 84) diejenige automatisch selektiert wird, die am nächsten zur Mitte eines dargestellten Bildausschnitts (88) liegt.

16. Verfahren zum Messen einer Objektgeometrie, nach Anspruch 1,
**dadurch gekennzeichnet,**
**dass** in Abhängigkeit von einer zu messenden Objektklasse und/oder einer Betriebsart des Koordinatenmessgerätes (10) Strategien zur Markierung der zur Messung des Objektes (12) geeigneten geometrischen Strukturen (60 - 70) ausgewählt bzw. festgelegt werden.

17. Verfahren zum Messen einer Objektgeometrie, nach Anspruch 1,
**dadurch gekennzeichnet,**
**dass** die Strategien zur Markierung der zur Messung des Objektes (12) geeigneten geometrischen Strukturen (64 - 70) von der Art des Objektinaterials wie Metall, Kunststoff und dgl. abhängig sind.

18. Verfahren nach zumindest einem der vorhergehenden Ansprüche,
**dadurch gekennzeichnet,**
**dass** die Strategien zur Markierung der zur Messung des Objektes (12) geeigneten geometrischen Strukturen (60 - 70) von einer Reflektionseigenschaft der Oberfläche des Objektes (12) wie beispielsweise hell, dunkel oder dgl. abhängig sind.

19. Verfahren nach zumindest einem der vorhergehenden Ansprüche,
**dadurch gekennzeichnet,**
**dass** als. Strategie zur Kontur- und Merkmalsextraktion Bildfilter und/oder Konturfilter wie z. B. Erosion, Dilation, Sobel (-Filter) oder Kontrastverstärker verwendet werden.

20. Verfahren zum Messen einer Objektgeometrie, nach Anspruch 1,
**dadurch gekennzeichnet,**
**dass** bei automatischem Durchlauf mehrerer Objekte (12) gleicher Art sowohl eine Bildverarbeitungsalgorithmik als auch das Bildverarbeitungsfenster (74, 76, 78) um einen Mittelwert der jeweiligen Geometriestrukturen angeordnet wird.

21. Verfahren zum Messen einer geometrischen Stuktur, nach Anspruch 1,
**dadurch gekennzeichnet,**
**dass** in Abhängigkeit von den zur Messung des Objektes geeigneten geometrischen Strukturen zur Auswertung einer Form wie Kreis, Gerade oder dgl. oder eines Maßes wie Durchmesser, Abstand, Winkel oder dgl. auf verschiedene Verfahren wie Scanning oder punktweise Messung zurückgegriffen wird.

22. Verfahren zum Messen einer geometrischen Struktur, nach Anspruch 1,
**dadurch gekennzeichnet,**
**dass** zur Selektion der Kontur- bzw. der Geometrieelemente vorhandene Solldateien zum Vergleich herangezogen werden.

23. Verfahren zur Messung von Werkstückgeometrien durch Koordinatenmessgeräte mit Bildverarbeitungssensoren, nach Anspruch 1
**dadurch gekennzeichnet,**
**dass** Bildverarbeitungskonturen (98) im Pixelraster (96) mit zusätzlichen Informationen zur Subpixel-Koordinate innerhalb des Pixels versehen werden.

24. Verfahren nach Anspruch 23,
**dadurch gekennzeichnet,**
**dass** die Konturen (98) durch sogenannte Freeman-Ketten (102) beschrieben werden und zu jedem Byte der Freeman-Kette entsprechende Subpixel-Bytes (104) hinzugefügt werden.

25. Verfahren nach Anspruch 23 oder 24,
**dadurch gekennzeichnet,**
**dass** bei Bildverarbeitungsoperatoren sowohl der Freeman-Code als auch die Subpixel-lnformation verarbeitet werden.

26. Verfahren nach zumindest einem der vorhergehenden Ansprüche,
**dadurch gekennzeichnet,**
**dass** aus dem Freeman-Code (102) und der Subpixel-Information (104) absolute Koordinaten in Subpixel-Auflösung errechnet werden.

27. Verfahren nach zumindest einem der vorhergehenden Ansprüche,
**dadurch gekennzeichnet,**
**dass** die Subpixel-Information (104) in getrennten Vektoren in x- und y-Richtung dargestellt werden.

## Claims

1. Method for measuring an object geometry (12), in particular a workpiece or tool geometry, by means of a coordinate measuring device (10), the object geometry (12) being recorded by an optical sensor (14), such as a camera, and represented as an image content (32) and geometrical structures (60 - 70) which are suitable for measuring the object (12), such as geometrical elements or contours, being selected in the image content and subsequently evaluated,
**characterised in that,**
provided a change in the image content is determined, the latter is investigated automatically for the geometrical structures (60 - 70) which are suitable for measuring the object (12), and **in that** the suitable structures are marked and made available for further evaluation, the determination of the change in the image content being effected by a change in the optical magnification and/or in the position of the mechanical axes of the coordinate measuring device (10), when a counter count at least of one axis of the coordinate measuring device (10) is constant for longer than a dead time after a position change, and/or in the light intensity.

2. Method according to claim 1,
**characterised in that**
the change in the image content (32) is represented by a signal.

3. Method according to claim 1 or 2,
**characterised in that**
the signal which represents the change in the image content (32) is produced by a control unit (22) of a zoom lens of the coordinate measuring device (10) upon change in the optical magnification.

4. Method according to at least one of the preceding claims,
**characterised in that**
the signal which represents the change in the image content (32) is produced by an exchange unit (56) such as a revolving holder upon change in the optical magnification by means of objective change.

5. Method according to at least one of the preceding claims,
**characterised in that**
the signal which represents the change in the image content (32) is produced by an illumination control (24) when a light reference value is within a tolerance range for longer than a dead time after a light change.

6. Method according to at least one of the preceding claims,
**characterised in that**
the signal which represents the change in the image content (32) is produced by an additional optical sensor when the light ratios are constant and conclusions are drawn herefrom regarding changes in the image content.

7. Method according to at least one of the preceding claims,
**characterised in that**
the image content (32) is investigated automatically for at least one regular geometry element, such as for example a straight line and/or a circle.

8. Method according to at least one of the preceding claims,
**characterised in that**
the automatically proposed geometrical structures, such as contours and geometry elements (60 - 70), are selected manually by the operator, for example by control of a screen cursor by means of an input device, such as a mouse, touchpad, touchscreen or the like.

9. Method according to at least one of the preceding claims,
**characterised in that**
the automatically selected geometrical structures are automatically transferred into a feature list upon renewed change in the image content (32).

10. Method according to at least one of the preceding claims,
**characterised in that**
the automatically preselected elements (60 - 70) are manually deleted and changed by the operator, in particular a region of interest from the represented object geometry, for example a contour, being defined by the operator himself.

11. Method for measuring an object geometry according to claim 1,
**characterised in that,**
for identifying the geometrical structures (60 - 70) which are suitable and relevant for measuring the object (12), a comparison of the geometrical structures of the object geometry is implemented with at least one regular geometry element, such as a circle and/or straight line, and **in that** those optical structures of the object geometry which have the least deviation in shape with respect to the regular geometry element are marked.

12. Method for measuring an object geometry according to claim 1,
**characterised in that**
the marking of the geometrical structure which is suitable for measuring the object is effected in such a manner that an image processing window (72, 74, 76, 78) is automatically adapted to the marked geometrical structure, such as a geometry element or contour.

13. Method according to claim 12,
**characterised in that**
an optimised adaptation is effected using a prescribed parts tolerance.

14. Method according to claim 12 to 13,
**characterised in that**
the automatic adaptation is implemented with respect to direction and proportion of the marked geometrical structure (64, 66).

15. Method for measuring an object geometry according to claim 1,
**characterised in that,**
from a quantity of preselected geometrical structures (60 - 70, 82, 84), that which is situated closest to the centre of a represented image section (88) is automatically selected.

16. Method for measuring an object geometry according to claim 1,
**characterised in that,**
dependent upon an object class which is to be measured and/or upon the operational mode of the coordinate measuring device (10), strategies for marking the geometrical structures (60 - 70) which are suitable for measuring the object (12) are selected or ascertained.

17. Method for measuring an object geometry according to claim 1,
**characterised in that**
the strategies for marking the geometrical structures (60 - 70) which are suitable for measuring the object (12) are dependent upon the type of object material, such as metal, plastic material and the like.

18. Method according to at least one of the preceding claims,
**characterised in that**
the strategies for marking the geometrical structures (60 - 70) which are suitable for measuring the object (12) are dependent upon a reflection property of the surface of the object (12), such as for example light, dark or the like.

19. Method according to at least one of the preceding claims,
**characterised in that,**
as strategy for contour and feature extraction, image filters and/or contour filters, such as for example erosion, dilation, Sobel (filters) or contrast amplifiers, are used.

20. Method for measuring an object geometry according to claim 1,
**characterised in that,**
in the case of automatic passage of a plurality of objects (12) of the same type, both an image processing algorithm and the image processing window (74, 76, 78) are disposed about an average value of the respective geometry structures.

21. Method for measuring a geometrical structure according to claim 1,
**characterised in that,**
dependent upon the geometrical structures which are suitable for measuring the object, in order to evaluate a shape, such as a circle, straight line or the like, or a dimension such as diameter, spacing, angle or the like, recourse is made to various methods, such as scanning or point-by-point measurement.

22. Method for measuring a geometrical structure according to claim 1,
**characterised in that**
reference files which are present for selecting the contour or the geometry elements are used for comparison.

23. Method for measuring tool geometries by coordinate measuring devices with image processing sensors according to claim 1,
**characterised in that**
image processing contours (98) in the pixel grid (96) are provided with additional information relating to the sub-pixel coordinate within the pixel.

24. Method according to claim 23,
**characterised in that**
the contours (98) are described by so-called Freeman chains (102) and corresponding sub-pixel bytes (104) are added to each byte of the Freeman chain.

25. Method according to claim 23 or 24,
**characterised in that,**
in the case of image processing operators, both the Freeman code and the sub-pixel information are processed.

26. Method according to at least one of the preceding claims,
**characterised in that,**
from the Freeman Code (102) and the sub-pixel information (104), absolute coordinates in the sub-pixel resolution are calculated.

27. Method according to at least one of the preceding claims,
**characterised in that**
the sub-pixel information (104) is represented in separate vectors in the x and y direction.

## Revendications

1. Procédé pour mesurer la géométrie d'un objet (12), notamment d'une pièce à usiner ou d'un outil, au moyen d'un appareil de mesure de coordonnées (10), en saisissant la géométrie de l'objet (12) par un capteur optique (14) tel qu'une caméra pour la représenter sous forme de contenu d'image (32), et en choisissant dans le contenu d'image des structures géométriques (60-70) adaptées à la mesure de l'objet (12), telles que des éléments ou des contours géométriques, que l'on exploite ensuite,
**caractérisé en ce**
**que** si une modification du contenu d'image est détectée, celui-ci est automatiquement analysé en recherchant des structures géométriques (60-70) adaptées à la mesure de l'objet (12), et que les structures appropriées sont marquées et mises à disposition pour une exploitation ultérieure, sachant que la saisie de la modification du contenu d'image est effectué sur la base d'une modification de l'intensité lumineuse et/ou sur la base d'une modification du grossissement optique et/ou de la position des axes mécaniques de l'appareil de mesure de coordonnées (10) lorsque, après un changement de position, un état de compteur d'au moins un axe de l'appareil de mesure de coordonnées (10) reste plus longtemps constant qu'un temps mort.

2. Procédé selon la revendication 1,
**caractérisé en ce**
**que** la modification du contenu d'image (32) est représentée par un signal.

3. Procédé selon la revendication 1 ou 2,
**caractérisé en ce**
**que** le signal représentant la modification du contenu d'image (32) est produit par une unité de commande (22) d'un objectif à focale variable de l'appareil de mesure de coordonnées (10) lors de la modification du grossissement optique.

4. Procédé selon au moins une des revendications précédentes,
**caractérisé en ce que**
le signal représentant la modification du contenu d'image (32) est produit par une unité de changement (56) telle qu'un support rotatif lorsque la modification du grossissement optique s'effectue par changement d'objectif.

5. Procédé selon au moins une des revendications précédentes,
**caractérisé en ce**
**que** le signal représentant la modification du contenu d'image (32) est produit par une commande d'éclairage (24), lorsqu'à la suite d'une modification de la luminosité, une valeur consigne de luminosité reste plus longtemps dans une plage de tolérance qu'un temps mort.

6. Procédé selon au moins une des revendications précédentes,
**caractérisé en ce**
**que** le signal représentant la modification du contenu d'image (32) est produit par un capteur optique supplémentaire lorsque les conditions d'éclairage sont constantes et que l'on en a conclu à des modifications du contenu d'image.

7. Procédé selon au moins une des revendications précédentes,
**caractérisé en ce**
**que** le contenu d'image (32) est analysé automatiquement en recherchant au moins un élément géométrique régulier tel que par exemple une droite et/ou un cercle.

8. Procédé selon au moins une des revendications précédentes,
**caractérisé en ce**
**que** les structures géométriques proposées automatiquement telles que des contours et des éléments géométriques (60-70) sont sélectionnées manuellement par l'opérateur, par exemple en commandant un curseur au moyen d'un dispositif d'entrée tel qu'une souris, un pavé tactile, un écran tactile ou similaire.

9. Procédé selon au moins une des revendications précédentes,
**caractérisé en ce**
**que** les structures géométriques automatiquement sélectionnées sont reprises automatiquement dans une liste de caractéristiques lors d'une nouvelle modification du contenu d'image (32).

10. Procédé selon au moins une des revendications précédentes,
**caractérisé en ce**
**que** les éléments (60-70) automatiquement présélectionnés sont effacés manuellement et modifiés par l'opérateur, qui peut notamment définir lui-même une zone intéressante de la géométrie de l'objet représentée, telle que par exemple un contour.

11. Procédé de mesure d'une géométrie d'objet selon la revendication 1,
**caractérisé en ce**
**que** l'on effectue une comparaison entre les structures géométriques de la géométrie de l'objet et au moins un élément géométrique régulier tel qu'un cercle et/ou une droite pour identifier les structures géométriques (60-70) adaptées et pertinentes pour la mesure de l'objet (12), et qu'on marque les structures optiques de la géométrie de l'objet qui présentent la moindre différence de forme par rapport à l'élément géométrique régulier.

12. Procédé de mesure d'une géométrie d'objet selon la revendication 1,
**caractérisé en ce**
**que** le marquage de la structure géométrique adaptée à la mesure de l'objet s'effectue en adaptant une fenêtre de traitement d'image (72, 74, 76, 78) automatiquement à la structure géométrique marquée telle que l'élément géométrique ou le contour.

13. Procédé selon la revendication 12,
**caractérisé en ce**
**qu'**on optimise une adaptation sur la base d'une tolérance prédéterminée de la pièce.

14. Procédé selon les revendications 12 à 13,
**caractérisé en ce**
**que** l'adaptation automatique s'effectue par rapport à la direction et à la proportion de la structure géométrique marquée (64, 66).

15. Procédé de mesure d'une géométrie d'objet selon la revendication 1,
**caractérisé en ce**
**que** l'on sélectionne automatiquement parmi une certaine quantité de structures géométriques (60-70, 82, 84) présélectionnées celle qui se trouve le plus à proximité du centre d'une section d'image (88) représentée.

16. Procédé de mesure d'une géométrie d'objet selon la revendication 1,
**caractérisé en ce**
**que** des stratégies de marquage des structures géométriques (60-70) adaptées à la mesure de l'objet (12) sont choisies ou déterminées en fonction de la classe de l'objet à mesurer et/ou du mode de fonctionnement de l'appareil de mesure de coordonnées (10).

17. Procédé de mesure d'une géométrie d'objet selon la revendication 1,
**caractérisé en ce**
**que** les stratégies de marquage des structures géométriques (60-70) adaptées à la mesure de l'objet (12) dépendent du type de matériau de l'objet tel que métal, matière plastique et similaire.

18. Procédé selon au moins une des revendications précédentes,
**caractérisé en ce**
**que** les stratégies de marquage des structures géométriques (60-70) adaptées à la mesure de l'objet (12) dépendent d'une propriété de réflexion de la surface de l'objet (12) telle que claire, sombre ou similaire.

19. Procédé selon au moins une des revendications précédentes,
**caractérisé en ce**
**que** comme stratégie d'extraction de contour et de caractéristique, on emploie des filtres d'image et/ou des filtres de contour tels que par exemple des filtres d'érosion, filtres de dilatation, filtres Sobel ou des amplificateurs de contraste

20. Procédé de mesure d'une géométrie d'objet selon la revendication 1,
**caractérisé en ce**
**que** lors du passage automatique de plusieurs objets (12) du même type, on dispose une algorithmique de traitement d'image ainsi que la fenêtre de traitement d'image (74, 76, 78) autour d'une valeur moyenne des structures géométriques respectives.

21. Procédé de mesure d'une structure géométrique selon la revendication 1,
**caractérisé en ce**
**qu'**on a recours à différents procédés, tels que mesure par balayage ou par points, en fonction des structures géométriques adaptées à la mesure de l'objet pour évaluer une forme telle que cercle, droite ou similaire ou une dimension telle que diamètre, distance, angle ou similaire.

22. Procédé de mesure d'une structure géométrique selon la revendication 1,
**caractérisé en ce**
**que** pour pouvoir sélectionner les éléments de contour ou les éléments géométriques, on utilise pour la comparaison des fichiers de valeurs consigne existants.

23. Procédé de mesure de géométries de pièces à usiner au moyen d'appareils de mesure de coordonnées comportant des capteurs de traitement d'image, selon la revendication 1,
**caractérisé en ce**
**que** des contours de traitement d'image (98), dans la trame de pixels (96), sont pourvus d'informations supplémentaires relatives aux coordonnées de sous-pixel à l'intérieur du pixel.

24. Procédé selon la revendication 23,
**caractérisé en ce**
**que** les contours (98) sont décrits par des chaînes dites de Freeman (102), et que des octets de sous-pixel (104) correspondants sont ajoutés à chaque octet de la chaîne de Freeman.

25. Procédé selon la revendication 23 ou 24,
**caractérisé en ce**
**que** dans le cas d'opérateurs de traitement d'image, on traite aussi bien le code de Freeman que l'information de sous-pixel.

26. Procédé selon au moins une des revendications précédentes,
**caractérisé en ce**
**que** l'on calcule des coordonnées absolues dans une résolution au sous-pixel à partir du code de Freeman (102) et de l'information de sous-pixel (104).

27. Procédé selon au moins une des revendications précédentes,
**caractérisé en ce**
**que** l'information de sous-pixel (104) est représentée par des vecteurs séparés dans les directions X et Y.
